# EUROPEAN PATENT APPLICATION

(11) **EP 4 804 260 A1**
(43) Date of publication of application: **09.09.2026**
(21) Application number: 24885677.5
(22) Date of filing: 28.10.2024
(51) Int. Cl.: H01M 8/0228, B23K 26/21, B23K 26/082, C25B 1/042, C25B 9/00, C25B 9/70, H01M 8/12, H01M 8/124, H01M 8/0206, H01M 8/0247

(54) **ELECTROCHEMICAL CELL, ELECTROCHEMICAL CELL STACK, AND MANUFACTURING METHODS FOR SAME**

(30) Priority: 01.11.2023 JP 2023188048
(71) Applicant: Niterra Co., Ltd., Nagoya-shi, Aichi 461-0005 (JP)
(72) Inventor: KOJIMA Akinori, Nagoya-shi, Aichi 461-0005 (JP); KUSAKABE Ayaka, Nagoya-shi, Aichi 461-0005 (JP)
(74) Representative: J A Kemp LLP
(86) International application number: PCT/JP2024/038404
(87) International publication number: WO 2025/094906

(57) **Abstract**

[Object] To provide an electrochemical cell which exhibits high joint strength between metal members while suppressing warpage of the metal members, an electrochemical cell stack, and methods of manufacturing the electrochemical cell and the electrochemical cell stack.

[Means for solution] The electrochemical cell includes a cell main body 20 including an air electrode, an electrolyte layer, and a fuel electrode stacked together and shaped, a first metal member 18 joined to the cell main body 20, a second metal member 17 joined to the first metal member 18 by means of welding after being brought into contact with the first metal member 18 in a stacking direction of the cell main body 20 to be located at a predetermined position of the first metal member 18; and a third metal member 16 joined to the second metal member 17 by means of welding, on a side of the second metal member 17 opposite its side joined to the first metal member 18, after being brought into contact with the second metal member 17 in the stacking direction of the cell main body 20 to be located at a second predetermined position of the second metal member 17. A region where metal members are joined by welding is defined as a weld portion 30, and a fusion proceeding direction of at least a part of the weld portion 30 is inclined in relation to the stacking direction of the cell main body 20.

## Description

### TECHNICAL FIELD

The present invention relates to an electrochemical cell, an electrochemical cell stack, and methods of manufacturing the same.

### BACKGROUND ART

A solid oxide fuel cell (hereinafter referred to as an "SOFC") has been known as one type of a fuel cell which generates electric power through electrochemical reaction between hydrogen and oxygen. A unit fuel cell (hereinafter referred to as a "unit cell"), which is a constituent unit of the SOFC, includes an electrolyte layer containing a solid oxide, an air electrode disposed on one side of the electrolyte layer in a predetermined direction, and a fuel electrode disposed on the other side of the electrolyte layer in the predetermined direction.

In some cases, a fuel electrode having a porous layer including an electron-conducting material and an ion-conducting oxide (hereinafter referred to as an "active layer") is used as a fuel electrode that constitutes the unit cell. Specifically, in some cases, a metal containing Ni (nickel) is used as an electron-conducting material, and YSZ (yttria-stabilized zirconia), which has oxygen ion conductivity, is used as an ion-conducting oxide. The active layer mainly serves a function of generating electrons and water vapor by causing reaction between oxygen ions supplied from the electrolyte layer to the active layer and hydrogen, etc. contained in a fuel gas supplied to a fuel chamber which faces the fuel electrode.

Furthermore, it has been known that the above-mentioned SOFC can be used as a solid oxide electrolysis cell (hereinafter referred to as an "SOEC") by supplying electricity thereto in a reverse direction, and is used as an energy storage technique of a type that converts water vapor into hydrogen using surplus electric power, which is an issue in the process of introducing renewable energy. In this case, the active layer mainly serves a function of generating hydrogen and oxygen ions supplied from the active layer to the electrolyte layer by causing reaction of water vapor contained in the fuel gas supplied to the fuel chamber which faces the fuel electrode.

### PRIOR ART DOCUMENT

### PATENT DOCUMENT

Patent Document 1: JP2021-34249A

### SUMMARY OF THE INVENTION

### PROBLEM TO BE SOLVED BY THE INVENTION

In order to enable such a unit cell to serve its function, the unit cell is used in an electrochemical cell, or an electrochemical cell stack in which a plurality of electrochemical cells are stacked, in such a manner that a plurality of members are disposed around the unit cell and are joined thereto. Since the electrochemical cell has a function of receiving hydrogen or generating hydrogen, it is important to ensure its gastightness for safety reasons. Therefore, among the plurality of members, metal members such as an inter connector, a separator, a connector plate, etc. are joined to each other by using a brazing filler metal or are joined to each other by means of laser welding. Since laser welding can perform welding with precise geometries, it is suitable for welding of the metal members of the electrochemical cell.

Meanwhile, in order to increase joint strength and gastightness, the width of welding by the laser welding (hereinafter referred to as the "welding width") must be increased, and, in order to increase the welding width, it has been necessary to increase the laser power or change the irradiation mode. However, increasing the laser power or changing the irradiation mode increases the quantity of heat, which could lead to quality defects such as lowering of gastightness due to warpage of the metal members, etc.

The present invention has been accomplished in light of these circumstances, and an object of the present invention is to provide an electrochemical cell which exhibits high joint strength between metal members while suppressing warpage of the metal members. The present invention also provides an electrochemical cell stack in which a plurality of such electrochemical cells are stacked, and methods of manufacturing the electrochemical cell and the electrochemical cell stack.

### MEANS FOR SOLVING THE PROBLEM

(1) In order to accomplish the above-mentioned object, an electrochemical cell of the present invention has adopted the following measures. Namely, the electrochemical cell of an application example of the present invention is characterized by comprising: a cell main body including an air electrode, an electrolyte layer, and a fuel electrode stacked together and shaped; a first metal member joined to the cell main body; a second metal member joined to the first metal member by means of welding after being brought into contact with the first metal member in a stacking direction of the cell main body to be located at a predetermined position of the first metal member; and a third metal member joined to the second metal member by means of welding, on a side of the second metal member opposite its side joined to the first metal member, after being brought into contact with the second metal member in the stacking direction of the cell main body to be located at a second predetermined position of the second metal member, wherein a region where metal members are joined by welding is defined as a weld portion, and a fusion proceeding direction of at least a part of the weld portion is inclined in relation to the stacking direction of the cell main body.
(2) The electrochemical cell of the application example described in the above paragraph (1) is further characterized in that the third metal member includes a fourth metal member and a fifth metal member, and the fourth metal member and the fifth metal member are joined by the weld portion.
(3) The electrochemical cell of the application example described in the above paragraph (1) or (2) is further characterized in that the inclination angle of the fusion proceeding direction of the weld portion is 5° or greater and 60° or less.
(4) The electrochemical cell of the application example described in any of the above paragraphs (1) to (3) is further characterized in that the fusion proceeding direction of the weld portion is inclined in a direction from the center of the second metal member toward its outer circumference.
(5) The electrochemical cell of the application example described in any of the above paragraphs (1) to (4) is further characterized in that the second metal member has a generally rectangular shape as viewed in the stacking direction of the cell main body, and, as approaching each corner portion of the second metal member from its side located adjacent to the corner portion, the inclination angle of the fusion proceeding direction of the weld portion increases and a fusion depth of the weld portion decreases.
(6) The electrochemical cell of the application example described in any of the above paragraphs (1) to (5) is further characterized in that the weld portion has a welding width of 80 µm or greater and 400 µm or less.
(7) The electrochemical cell of the application example described in any of the above paragraphs (1) to (6) is further characterized in that the weld portion has a fusion depth of 50 µm or greater and 90 µm or less.
(8) The electrochemical cell of the application example described in any of the above paragraphs (1) to (7) is further characterized in that the weld portion has a bead width of 100 µm or greater and 500 µm or less.
(9) The electrochemical cell of the application example described in any of the above paragraphs (1) to (8) is further characterized in that the second metal member has a thickness of 0.05 mm or greater and 1 mm or less.
(10) The electrochemical cell of the application example described in any of the above paragraphs (1) to (9) is further characterized in that the cell main body has a thickness of 0.5 mm or greater and 5 mm or less as measured in the stacking direction of the cell main body.
(11) The electrochemical cell of the application example described in any of the above paragraphs (1) to (10) is further characterized in that the cross-sectional shape of the weld portion on the first metal member side is such that the width of the weld portion decreases from the first metal member side toward the second metal member side, and the cross-sectional shape of the weld portion on the third metal member side is such that the width of the weld portion decreases from the third metal member side toward the second metal member side.
(12) The electrochemical cell of the application example described in any of the above paragraphs (1) to (11) is further characterized in that the electrochemical cell is an electrolysis cell or a reversible fuel cell.
(13) An electrochemical cell stack of another application example of the present invention is characterized in that a plurality of electrochemical cells as described in any of the above paragraphs (1) to (12) are stacked in the stacking direction of the cell main body and are joined.
(14) An electrochemical cell manufacturing method of still another application example of the present invention is a method of manufacturing an electrochemical cell, characterized by comprising the steps of: preparing a cell main body including an air electrode, an electrolyte layer, and a fuel electrode stacked together and shaped; preparing a first metal member which is to be joined to the cell main body, a second metal member which is to be joined to the first metal member, and a third metal member which is to be joined to the second metal member; bringing the second metal member into contact with the first metal member in a stacking direction of the cell main body to be located at a predetermined position of the first metal member, and welding the second metal member to the first metal member by means of laser welding in such a manner that a fusion proceeding direction of the welding is inclined in relation to the stacking direction of the cell main body; and bringing the third metal member into contact with the second metal member, on a side of the second metal member opposite its side joined to the first metal member, in the stacking direction of the cell main body to be located at a second predetermined position of the second metal member, and welding the third metal member to the second metal member by means of laser welding in such a manner that the fusion proceeding direction of the welding is inclined in relation to the stacking direction of the cell main body.
(15) The electrochemical cell manufacturing method of the application example of the present invention described in the above paragraph (14) is further characterized in that the steps for welding are performed by using a laser machining machine equipped with an optical head moving device.
(16) The electrochemical cell manufacturing method of the application example of the present invention described in the above paragraph (15) is further characterized in that the steps for welding are performed by using a laser machining machine equipped with a galvanometer mirror or a polygon mirror.
(17) An electrochemical cell stack manufacturing method of still another application example of the present invention is a method of manufacturing an electrochemical cell stack characterized by comprising the steps of: preparing a plurality of electrochemical cells by the manufacturing method as described in any of the above paragraphs (14) to (16); stacking the electrochemical cells in the stacking direction of the cell main body; and joining the stacked electrochemical cells.

### EFFECT OF THE INVENTION

According to the present invention, the fusion proceeding direction of the weld portion between the first metal member and the second metal member or between the second metal member and the third metal member is inclined in relation to the stacking direction of the cell main body. Therefore, even when laser power is similar to that conventionally employed, the strength of welding between the metal members can be increased.

### BRIEF DESCRIPTION OF THE DRAWINGS

[FIG. 1] FIG. 1 is a perspective view showing one example of an electrochemical cell stack according to an embodiment.
[FIG. 2] FIG. 2 is a schematic sectional view showing one example of an electrochemical cell according to the embodiment.
[FIG. 3] FIG. 3 is a schematic sectional view showing the example of the electrochemical cell according to the embodiment in an exploded state.
[FIG. 4] Sections (a) and (b) of FIG. 4 are a schematic sectional view and a schematic top view, respectively, showing examples of an inter connector and an IC separator according to the embodiment.
[FIG. 5] Sections (a) and (b) of FIG. 5 are a schematic sectional view and a schematic top view, respectively, showing the example of the electrochemical cell according to the embodiment.
[FIG. 6] FIG. 6 is a sectional view of a first metal member, a second metal member, and a weld portion of an example.
[FIG. 7] FIG. 7 is a sectional view schematically showing the cross section of FIG. 6.
[FIG. 8] FIG. 8 is a schematic top view showing examples of the first metal member, the second metal member, and the weld portions.
[FIG. 9] Sections (a) to (c) of FIG. 9 are schematic sectional views showing steps of a method of manufacturing the electrochemical cell.
[FIG. 10] Sections (a) to (c) of FIG. 10 are schematic sectional views showing steps of the method of manufacturing the electrochemical cell.
[FIG. 11] FIG. 11 is a schematic sectional view showing a step of a method of manufacturing the electrochemical cell stack.

### MODES FOR CARRYING OUT THE INVENTION

### [Embodiment]

### [Structure of electrochemical cell stack]

Next, an embodiment of the present invention will be described with reference to the drawings. In order to facilitate understanding of description, the same constituent elements are denoted by the same reference numerals throughout the drawings, and they will not be described redundantly. Notably, in the configurational drawings, the sizes of the constituent elements are represented conceptually and do not necessarily represent their actual dimensional ratios.

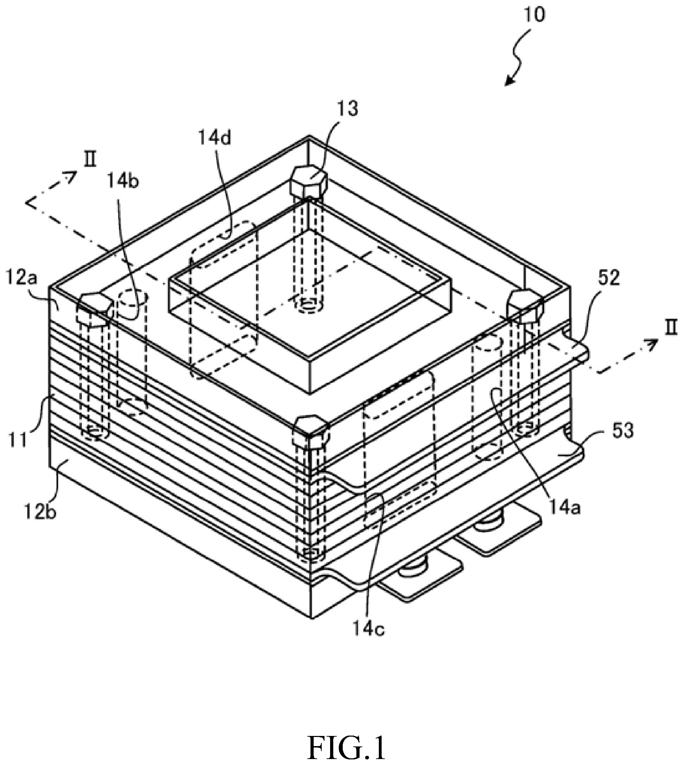

FIG. 1 is a perspective view of an electrochemical cell stack 10 according to the embodiment. Examples of the electrochemical cell stack 10 include a solid oxide fuel cell (SOFC) and a solid oxide electrolysis cell (SOEC). The electrochemical cell stack 10 may be a reversible electrochemical cell stack which can be used as the SOFC and the SOEC. The electrochemical cell stack 10 or an electrochemical cell 11 is preferably selected from electrolysis cells and reversible fuel cells.

The electrochemical cell stack 10 includes a plurality of quadrangular electrochemical cells 11 stacked in a thickness direction and quadrangular end plates (an upper end plate 12a and a lower end plate 12b) which sandwich the electrochemical cells 11 in the thickness direction. Each electrochemical cell 11 constitutes a fuel chamber 33 (which will be described later) of a reaction unit. Bolts 13 are disposed at four corners of a peripheral edge portion of the electrochemical cell stack 10. The bolts 13 penetrate the upper end plate 12a, the electrochemical cells 11, and the lower end plate 12b in the thickness direction. The upper end plate 12a, the electrochemical cells 11, and the lower end plate 12b are fastened with the bolts 13.

Four spaces which penetrate the peripheral edge portion of the electrochemical cell stack 10 in the thickness direction respectively function as a passage 14a through which a gas flows from the outside of the electrochemical cell stack 10 to the fuel chamber 33 of each electrochemical cell 11, a passage 14b through which a gas flows from the fuel chamber 33 to the outside of the electrochemical cell stack 10, a passage 14c through which a gas flows from the outside of the electrochemical cell stack 10 to an air chamber 35 (which will be described later) of each electrochemical cell 11, and a passage 14d through which a gas flows from the air chamber 35 to the outside of the electrochemical cell stack 10.

The electrochemical cell stack 10 includes an upper terminal plate 52 disposed between the upper end plate 12a and an electrochemical cell 11 and a lower terminal plate 53 disposed between the end plate 12b and an electrochemical cell 11. The electrochemical cells 11 are connected in series between the upper terminal plate 52 and the lower terminal plate 53. Protruding portions of the upper terminal plate 52 and the lower terminal plate 53 function as terminals. The above-described configuration may modified in such a manner that the upper terminal plate 52 and the lower terminal plate 53 are omitted, electrochemical cells 11 located adjacent to the upper end plate 12a and the lower end plate 12b are electrically connected to the upper end plate 12a and the lower end plate 12b, and the upper end plate 12a and the lower end plate 12b are used as the terminals of the electrochemical cell stack 10.

### [Structure of electrochemical cell]

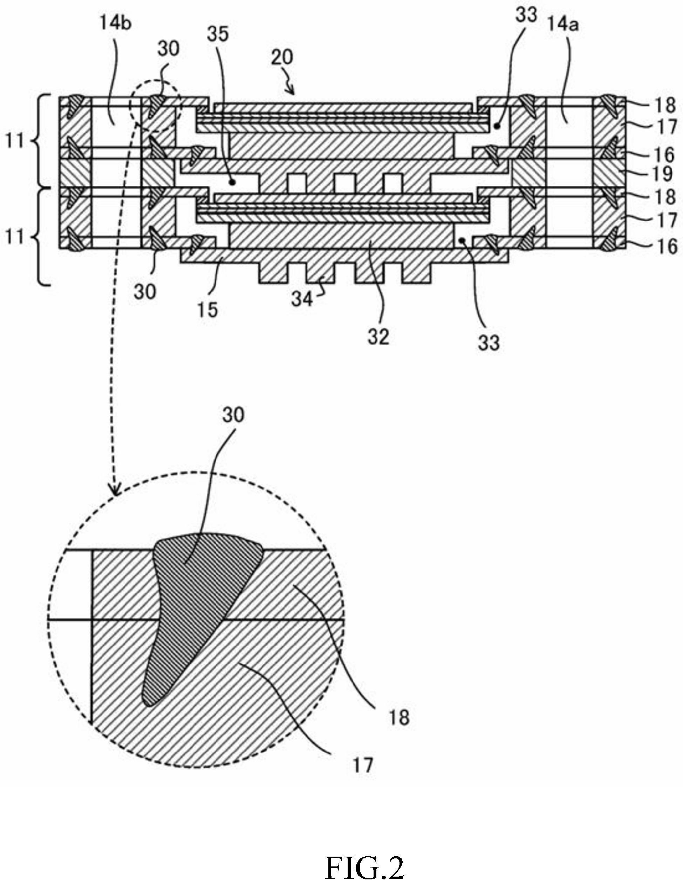

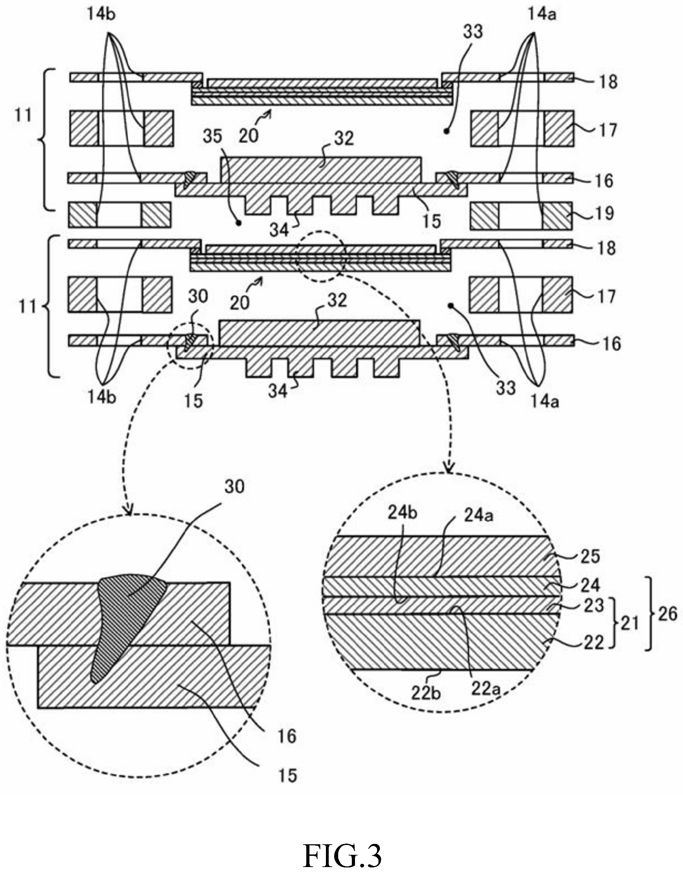

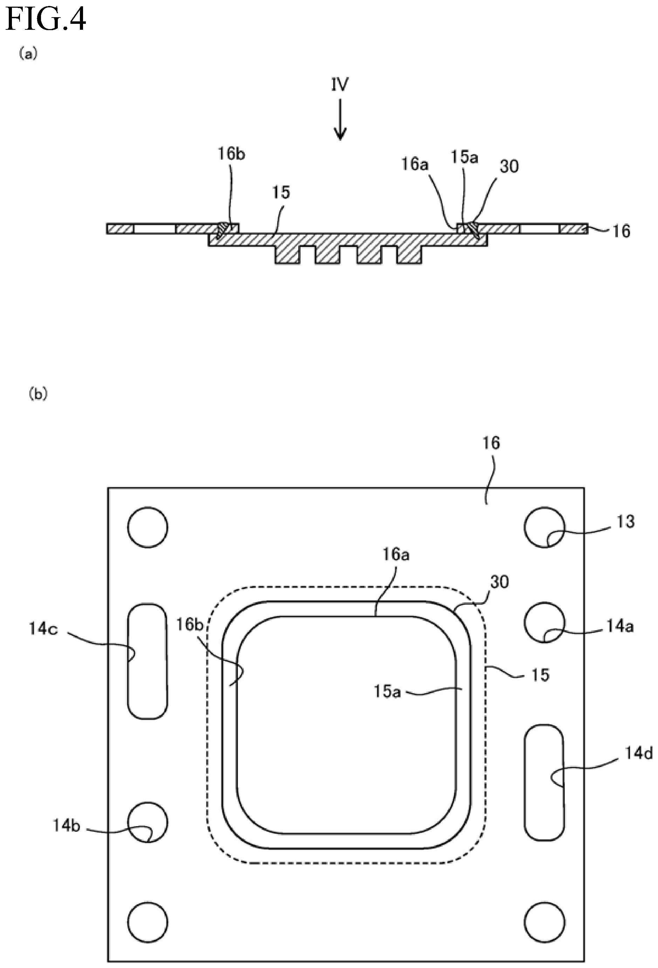

FIG. 2 is a schematic sectional view showing one example of the electrochemical cell according to the embodiment. FIG. 3 is a schematic sectional view showing the example of the electrochemical cell according to the embodiment in an exploded state. FIG. 2 is a sectional view taken along a line II-II of FIG. 1 which passes through the passages 14a and 14b and shows two electrochemical cells 11 of the electrochemical cell stack 10. FIG. 3 is a sectional view of the components of FIG. 2 in a state in which the components are separated from each other in the thickness direction. However, in FIG. 3, weld portions 30 of members which are welded to the fuel electrode frame 17 are not shown. In FIGS. 2 and 3, the thicknesses of respective portions are exaggerated (the same applies to FIG. 4, FIG. 5, and FIGS. 9 to 11). Each electrochemical cell 11 includes an inter connector 15, an IC separator 16, a fuel electrode frame 17, a cell main body 20, and a cell separator 18 arranged in this order from the lower side in the thickness direction. An air electrode frame 19 is disposed between two electrochemical cells 11. In the present embodiment, each electrochemical cell 11 does not include the air electrode frame 19. However, an assembly including an electrochemical cell 11 and an air electrode frame 19 joined to the upper or lower surface of the electrochemical cell 11 may be considered as the electrochemical cell 11. Holes (the passages 14a and 14b) penetrate the inter connector 15, the fuel electrode frame 17, the cell separator 18, and the air electrode frame 19.

The cell main body 20 includes a fuel electrode 21, an electrolyte layer 24, and an air electrode 25 arranged in this order from the lower side. The fuel electrode 21 includes a support 22 and a functional layer 23 disposed over the entirety of a front surface 22a of the support 22. The fuel electrode 21 is a quadrangular plate-shaped porous body having gas permeability in which the porosity of the support 22 is higher than that of the functional layer 23. The thickness of the support 22 falls within the range of, for example, 200 µm to 1000 µm.

The thickness of the support 22 is constant in the direction of a plane perpendicular to the thickness direction, when a variation in thickness caused by irregularities originating from particles that constitute the support 22 and pores contained in the support 22 is ignored. Thus, it is possible to reduce warping and waviness caused by a variation in the thickness of the support 22.

The support 22 has a function of supporting mainly the functional layer 23. The material of the support 22 may be the same as the material of the functional layer 23 or may differ from the material of the functional layer 23. In the case where the material of the support 22 differs from the material of the functional layer 23, an example of the material of the support 22 is stabilized zirconia.

In the case where the functional layer 23 is used in a fuel cell, the functional layer 23 has a function of generating electrons through reaction between oxide ions supplied from the electrolyte layer 24 and a fuel gas (hydrogen, carbon monoxide, hydrocarbon, etc.). In the case where the functional layer 23 is used for water vapor electrolysis, the functional layer 23 has a function of electrolyzing water vapor into hydrogen and oxide ions when electricity is supplied thereto. The thickness of the functional layer 23 is, for example, 10 µm to 40 µm.

The functional layer 23 includes a catalyst containing Ni, and a Y-in-zirconia solid solution (i.e., zirconia containing Y in a solid solution state). Examples of the catalyst include Ni, Ni-based alloys, a cermet which is a complex (sintered body) of NiO and an oxide (solid electrolyte). The cermet generates Ni through reduction of NiO by hydrogen. An example of the oxide (solid electrolyte) contained in the cermet is a Y-in-zirconia solid solution. The functional layer 23 is not limited thereto, and may include, for example, the catalyst containing Ni, and a Gd-in-ceria solid solution.

The electrolyte layer 24 is a plate-shaped member which exhibits oxide ion conductivity under operating conditions of the electrochemical cell 11. The functional layer 23 of the fuel electrode 21 is disposed over the entirety of a back surface 24b of the electrolyte layer 24. The porosity of the electrolyte layer 24 is lower than that of the fuel electrode 21.

Examples of the material of the electrolyte layer 24 include stabilized zirconia, ceria-based solid solution, and a solid solution of alumina and one or two types of solid solutions selected from stabilized zirconia and ceria-based solid solution. Examples of the stabilizer of stabilized zirconia include CaO, MgO, Y₂O₃, Sc₂O₃, and Yb₂O₃. Examples of the element that can form a solid solution with ceria include Gd, Sm, and Y. Namely, the electrolyte layer 24 is formed of a solid electrolyte. The thickness of the electrolyte layer 24 is, for example, 5 µm to 40 µm. Each of the fuel electrode 21 and the electrolyte layer 24 is a sintered body 26 having a plate-like shape as a whole.

The air electrode 25 is disposed at the center of the front surface 24a of the electrolyte layer 24. In the case of the fuel cell, the air electrode 25 is a field where a gas-phase oxidizer (oxygen) reacts with electrons, thereby becoming oxide ions. In the case of water vapor electrolysis, the air electrode 25 is a field where oxide ions release electrons, thereby becoming oxygen. The air electrode 25 must enable easy adsorption of a gas thereto, must have high oxygen ion conductivity, and must have electron conductivity.

Examples of the material of the air electrode 25 include La_{1-X}Sr_{X}MnO_{3-δ}, La_{1-X}Sr_{X}CoO_{3-δ}, La_{1-X}Sr_{X}Co_{1-Y}Fe_{Y}O_{3-δ}, Pr_{1-X}Sr_{X}MnO_{3-δ}, which are perovskite oxides. Another example of the material of the air electrode 25 is a composite material of one or more types of oxides selected from these perovskite oxides and an electrolyte which can constitute the electrolyte layer 24.

An intermediate layer may be disposed between the electrolyte layer 24 and the air electrode 25. The intermediate layer lowers the reaction between the electrolyte layer 24 and the air electrode 25 at high temperature during heating in manufacture of the cell main body 20 or during operation of the electrochemical cell 11. An example of the material of the intermediate layer is a ceria-based solid solution. Examples of the element that can form a solid solution with ceria include Gd, Sm, La, and Y.

The inter connectors 15 are electrically conductive members disposed on opposite sides of the cell main body 20 in the thickness direction. Each inter connector 15 has a flat portion having the shape of a generally rectangular flat plate, and a plurality of current collecting portions 34 protruding from the flat portion toward the air electrode side and having a generally columnar shape. Each current collecting portion 34 of each inter connector 15 is joined to the air electrode 25 of the cell main body 20, for example, via an electrically conductive joining material formed of a spinel oxide, whereby the current collecting portions 34 are electrically connected to the air electrode 25. The electrically conductive joining material may be provided over the entire surface of the inter connector 15 on the air electrode 25 side. Each inter connector 15 establishes electrical connection between electrochemical cells 11 located adjacent to each other in the thickness direction. An example of the material of the inter connectors 15 is stainless steel.

The inter connectors 15 and the IC separators 16 will be described with reference to sections (a) and (b) of FIG. 4. Sections (a) and (b) of FIG. 4 are a schematic sectional view and a schematic top view showing examples of the inter connectors 15 and the IC separators 16 according to the embodiment. Section (a) of FIG. 4 is a sectional view of one inter connector 15 and one IC separator 16 joined together. Section (b) of FIG. 4 is a top view of the inter connector 15 and the IC separator 16 as viewed from a direction of arrow IV in section (a) of FIG. 4.

The IC separator 16 is a quadrangle frame-shaped member having an opening 16a near the center. An opening surrounding portion 16b of the IC separator 16, which surrounds the opening 16a, joined, for example, by means of laser welding, to the upper-side surface of a peripheral edge portion 15a of the flat portion of the inter connector 15. An example of the material of the IC separator 16 is stainless steel. In section (b) of FIG. 4, welding locations other than the weld portions 30 of the inter connector 15 and the IC separator 16 are not illustrated.

A pair of the inter connector 15 and the IC separator 16 included in a certain electrochemical cell 11 constitute the fuel chamber 33 of that electrochemical cell 11 between the inter connector 15 and the IC separator 16 of that electrochemical cell 11. In addition, a pair of the inter connector 15 and the IC separator 16 included in a certain electrochemical cell 11 separate the fuel chamber 33 of that electrochemical cell 11 from the air chamber 35 of another electrochemical cell 11 located below and adjacent to that electrochemical cell 11. In this manner, leakage of gas between the electrochemical cells 11 at the peripheral edge portions of the electrochemical cells 11 is suppressed by the inter connectors 15 and the IC separators 16.

One inter connector 15 and one IC separator 16 are joined to the upper side of the electrochemical cell 11 located at the uppermost position in the electrochemical cell stack 10, and the IC separator 16 joined to that inter connector 15 is electrically connected to the upper terminal plate 52. The IC separator 16 connected to the inter connector 15 on the lower side of the electrochemical cell 11 located at the lowermost position in the electrochemical cell stack 10 is electrically connected to the lower terminal plate 53.

In the present embodiment, the inter connector 15 and the IC separator 16 are separate members and are joined together by means of laser welding. However, the inter connector 15 and the IC separator 16 may be joined together by a method other than laser welding. Alternatively, the inter connector 15 and the IC separator 16 may be integrally formed as a single member.

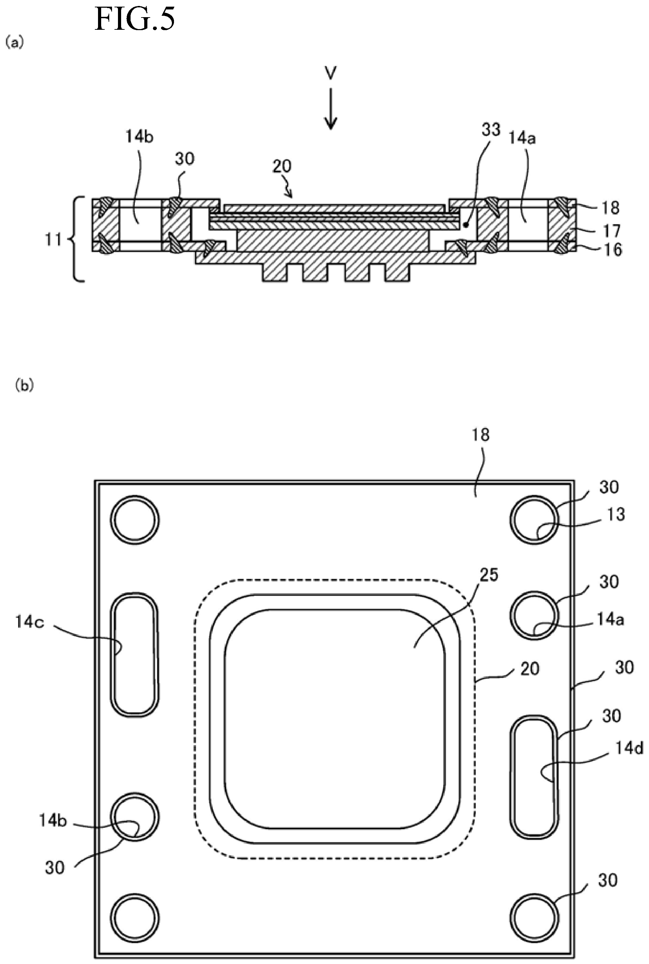

The fuel chamber 33 will be described with reference to sections (a) and (b) of FIG. 5. Sections (a) and (b) of FIG. 5 are a schematic sectional view and a schematic top view showing an example of the electrochemical cell 11 according to the embodiment. Section (b) of FIG. 5 is a top view of the cell main body 20 and the cell separator 18 as viewed in the direction of arrow V in section (a) of FIG. 5.

The fuel electrode frame 17 is a quadrangle frame-shaped member having an opening near the center. The fuel electrode frame 17 is disposed between the IC separator 16 (and the inter connector 15) and the cell separator 18. The fuel electrode frame 17 is joined to the IC separator 16 by means of laser welding. An example of the material of the fuel electrode frame 17 is stainless steel. The fuel electrode frame 17 surrounds the cell main body 20 and the current collector 32 provided at the center of the inter connector 15. The fuel chamber 33 surrounded by the inter connector 15, the IC separator 16, the fuel electrode frame 17, the cell separator 18, and the cell main body 20 is provided inside the fuel electrode frame 17.

The current collector 32 disposed in the fuel chamber 33 electrically connects the fuel electrode 21 and the inter connector 15. An example of the material of the current collector 32 is a porous body formed of a metal (e.g., Ni) and having gas permeability.

The cell separator 18 is a quadrangle frame-shaped member having an opening near the center, which opening is larger than the air electrode 25. The cell separator 18 is joined to the fuel electrode frame 17 by means of laser welding. An example of the material of the cell separator 18 is stainless steel. The cell separator 18 is airtightly joined to the front surface 24a of the electrolyte layer 24 by using a brazing filler metal 27 or the like, without being joined to the air electrode 25.

Hydrogen is supplied to the fuel chamber 33 or hydrogen is generated in the fuel chamber 33. Therefore, it is necessary to increase the degree of gastightness of the fuel chamber 33 sufficiently. Therefore, in the present embodiment, the region that constitutes the fuel chamber 33, rather than the entire reaction unit, is considered as the electrochemical cell 11. The welding between the IC separator 16 and the fuel electrode frame 17 and welding between the cell separator 18 and the fuel electrode frame 17 are preferably performed by means of laser welding. Welding is performed, for example, at locations around the passages 14a, 14b, 14c, and 14d, locations around through-holes into which the bolt 13 are inserted for fastening, locations on the inner side of the outer circumference of the IC separator 16, and locations on the inner side of the outer circumference of the cell separator 18. Notably, in section (a) of FIG. 5, the weld portions 30 on the inner side of the outer circumference of the cell separator 18 are not illustrated. This also applies to FIG. 2, etc.

The air electrode frame 19 is a quadrangle frame-shaped member having an opening near the center. The air electrode frame 19 is disposed between the IC separator 16 (and the inter connector 15) and the cell separator 18. The air electrode frame 19 may be joined to the IC separator 16 by using adhesive. The air electrode frame 19 may be joined to the cell separator 18 by using adhesive. An example of the material of the air electrode frame 19 is an insulating material such as mica. The air electrode frame 19 surrounds the current collecting portion 34 provided at the center of the inter connector 15. The current collecting portions 34 electrically connect the air electrode 25 and the inter connector 15. In the present embodiment, the current collecting portions 34 are formed integrally with the inter connector 15. However, the structure of the inter connector 15 is not limited thereto. The current collecting portions 34 may be members which are separate from the inter connector 15.

The air chamber 35 surrounded by the inter connector 15, the IC separator 16, the air electrode frame 19, the cell separator 18, and the cell main body 20 is provided inside the air electrode frame 19. The cell separator 18 separates the fuel chamber 33 and the air chamber 35 in one electrochemical cell 11, thereby preventing mixing of the fuel gas within the fuel chamber 33 and the oxidizer gas (oxygen, air, etc.) within the air chamber 35. In the present embodiment, the air chamber 35 is provided between the electrochemical cell 11 on the upper side and the electrochemical cell 11 on the lower side.

In the present embodiment, the cell separator 18, the fuel electrode frame 17, and each of the inter connector 15 and the IC separator 16 are examples of a first metal member 61, a second metal member 62, and a third metal member 63, respectively. As described above, the cell separator 18 is joined to the cell main body 20. The fuel electrode frame 17 is joined to the cell separator 18 by the weld portion 30 after being brought into contact with the cell separator 18 in the stacking direction of the cell main body 20 such that the fuel electrode frame 17 is located at a predetermined position of the cell separator 18. In addition, on a side of the fuel electrode frame 17 opposite its side joined to the cell separator 18, the inter connector 15 and the IC separator 16 are joined to the fuel electrode frame 17 by the weld portion 30 after being brought into contact with the fuel electrode frame 17 in the stacking direction of the cell main body 20 such that the inter connector 15 and the IC separator 16 are located at a second predetermined position of the fuel electrode frame 17. At that time, as shown in FIG. 2, the fusion proceeding direction of at least a part of each weld portion 30 is inclined in relation to the stacking direction of the cell main body 20. As a result, even when laser power is similar to that conventionally employed, the depth of fusion can be maintained small, whereby warpage of the metal members can be suppressed. In addition, the welding width can be increased, whereby the welding strength can be increased.

Of the weld portions 30, at least the weld portion 30 at a location where the angle formed between a welding advance direction and a straight line connecting the center of the first metal member 61 and the welding location is 90° is preferably such that the fusion proceeding direction is inclined in relation to the stacking direction of the cell main body 20. Each weld portion 30 may have a part in which the fusion proceeding direction is not inclined in relation to the stacking direction of the cell main body 20.

In addition, in the present embodiment, the inter connector 15 and the IC separator 16 are examples of a fourth metal member 64 and a fifth metal member 65, respectively. The inter connector 15 and the IC separator 16 are joined together by the weld portion 30. In addition, as shown in FIG. 2, the fusion proceeding direction of at least a part of the weld portion 30 is inclined in relation to the stacking direction of the cell main body 20.

In the below, the feature of the weld portion 30 between the first metal member 61 and the second metal member 62 will be described. However, the following description can be read as describing the feature of the weld portion between the second metal member 62 and the third metal member 63 by reading the first metal member as the third metal member.

The inclination angle of the fusion proceeding direction of the weld portion 30 is preferably 5° or greater and 60° or less, more preferably 10° or greater and 60° or less, further preferably 15° or greater and 60° or less. By increasing the inclination angle within the above-mentioned range, the welding width can be increased sufficiently, whereby the effect of maintaining some fusion depth of the second metal member 62 and the effect of increasing the welding width are well-balanced. The inclination angle of the fusion proceeding direction of the weld portion 30 is measured in a cross section which is parallel to the stacking direction of the cell main body 20 and perpendicular to the welding advance direction. The weld portion 30 may have a part in which the inclination angle of the fusion proceeding direction falls outside the above-mentioned range.

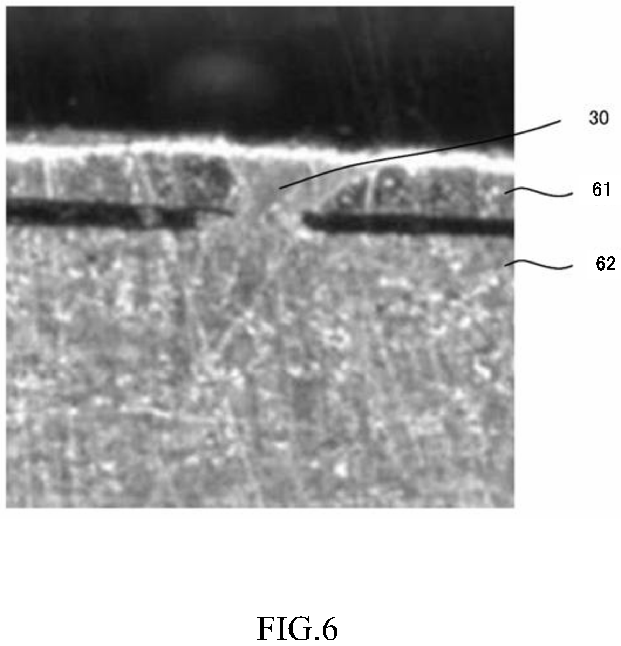

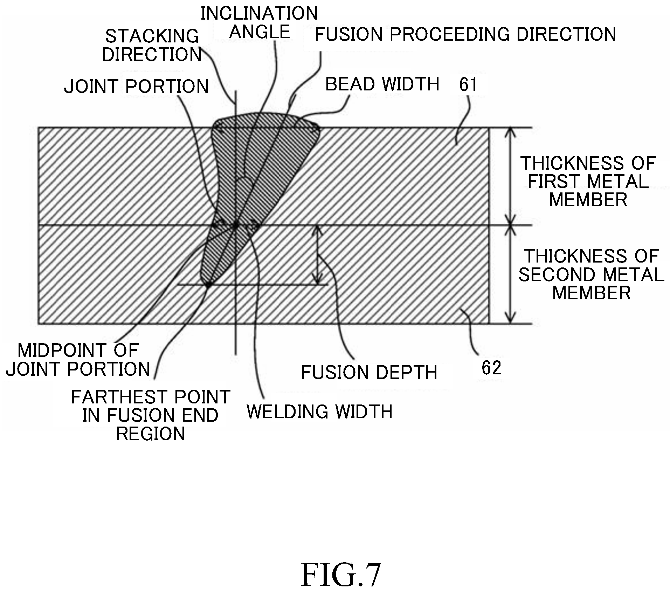

FIG. 6 is a sectional view of the first metal member 61, the second metal member 62, and the weld portion 30 of an example. FIG. 7 is a sectional view schematically showing the cross section of FIG. 6. The cross sections of FIG. 6 and FIG. 7 are cross sections which are parallel to the stacking direction of the cell main body 20 and perpendicular to the welding advance direction. As shown in FIG. 7, the fusion proceeding direction of the weld portion 30 is the direction of a straight line which passes through the midpoint of a joint portion and a point in a fusion end region, which point is the farthest from the midpoint of the joint portion. The fusion angle of the weld portion 30 is the angle between the straight line of the fusion proceeding direction and the straight line of the stacking direction (vertical line).

It is preferred that the fusion proceeding direction of the weld portion 30 is inclined in a direction from the center of the first metal member 61 toward the outer circumference thereof. The center and outer circumference of the first metal member 61 are those when the first metal member 61 is viewed in the stacking direction of the cell main body 20. In addition, it is preferred that, in a cross section which is perpendicular to the stacking direction of the cell main body 20 and perpendicular to the welding advance direction, the sectional shape of the weld portion 30 is such that the width of the weld portion 30 decreases from the first metal member 61 side toward the second metal member 62 side.

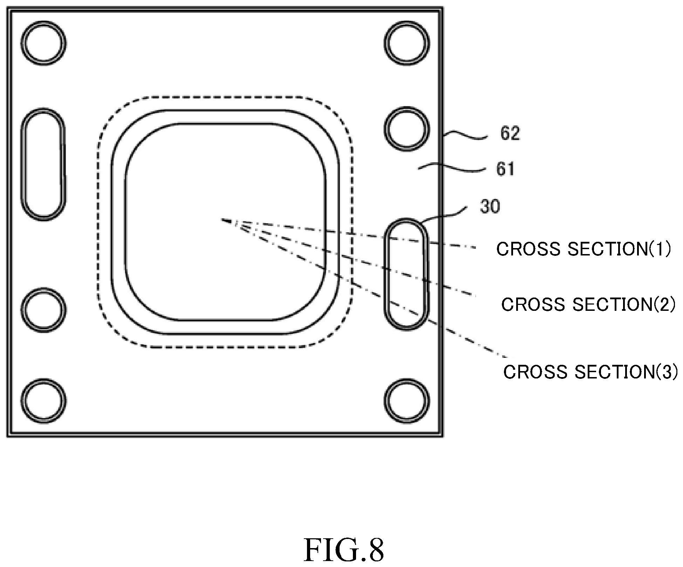

In addition, it is preferred that the first metal member 61 has a generally rectangular shape as viewed in the stacking direction of the cell main body 20, and, as approaching each corner portion of the first metal member 61 from a side located adjacent thereto, the inclination angle of the fusion proceeding direction of the weld portion 30 increases and the fusion depth of the weld portion 30 decreases. In other words, it is preferred that the larger the distance of the weld portion 30 from the center of the first metal member 61, the larger the inclination angle of the fusion proceeding direction of the weld portion 30 and the smaller the fusion depth of the weld portion 30. Namely, it is preferred that, in FIG. 8, the inclination angle of the fusion proceeding direction of the weld portion 30 increases and the fusion depth of the weld portion 30 decreases as the welding position changes from a cross section (1), to a cross section (2), and then to a cross section (3). FIG. 8 is a schematic top view showing examples of the first metal member 61, the second metal member 62, and the weld portion 30. FIG. 8 shows such a schematic top view in the case where the first metal member 61 is the cell separator 18, and the second metal member 62 is the fuel electrode frame 17. Notably, in FIG. 8, the cross sections are taken perpendicular to the sheet and perpendicular to the welding advance direction. The location at which the angle between the welding advance direction and a straight line connecting the center of the first metal member 61 and the welding location is 0° may be excluded from the above locations for comparison.

By virtue of these, the fusion proceeding direction inclines toward the outer circumference, whereby the distribution of heat dissipation changes, which leads to stress relaxation. In the case where laser welding is performed by using a laser machining machine equipped with an optical head moving device; in particular, a laser machining machine equipped with a galvanometer mirror or a polygon mirror, the number of times the first metal member 61 and the second metal member 62 are re-attached to a jig can be reduced, whereby production cost can be reduced, while welding strength is maintained.

The welding width of the weld portion 30 is preferably 80 µm or greater and 400 µm or less. The fusion depth of the weld portion 30 is preferably 50 µm or greater and 90 µm or less. In addition, the bead width of the weld portion 30 is preferably 100 µm or greater and 500 µm or less. Warpage of the metal members can be suppressed by setting the welding width, the fusion depth, and the bead width to fall within the respective ranges mentioned above. In addition, the welding strength can be increased sufficiently. The weld portion 30 may be formed in a spiral shape with respect to the line direction of welding. By virtue of this, even when the second metal member 62 is thin, it is possible to further increase the welding width while maintaining the small fusion depth. The welding width, the fusion depth, and the bead width of the weld portion 30 are measured in a cross section perpendicular to the stacking direction of the cell main body 20 and perpendicular to the welding advance direction.

The thickness of the first metal member 61 is preferably 0.05 mm or greater and 1 mm or less. The method of the present invention can perform precise welding for such a thin plate and can maintain sufficient welding strength while suppressing warpage. The thickness of the first metal member 61 is that in the stacking direction of the weld portion 30. The joint portions of the first metal member 61 and the second metal member 62 preferably have the shape of a flat plate.

The thickness of the cell main body 20 in the stacking direction of the cell main body 20 is preferably 0.5 mm or greater and 5 mm or less. The method of the present invention can perform precise welding for metal members used in an electrochemical cell or an electrochemical cell stack which includes the cell main body 20 having such a small thickness and can maintain sufficient welding strength while suppressing warpage of the metal members.

Notably, in the present embodiment, the cell separator 18, the fuel electrode frame 17, and the inter connector 15 and the IC separator 16 correspond to the first metal member 61, the second metal member 62, and the third metal member, respectively. However, the first metal member 61, the second metal member 62, and the third metal member may be a combination of other metal members. When metal members are joined together by means of welding, the present invention can maintain sufficient welding strength while suppressing warpage of the metal members. Therefore, the present invention can be preferably applied to locations where metal members that are prone to warping are used, or where welding strength or gastightness is required. Notably, the structures of the cell main body 20, the electrochemical cell 11, and the electrochemical cell stack 10 are not limited to the above-described structures.

### [Manufacturing method]

### [Method of manufacturing the electrochemical cell]

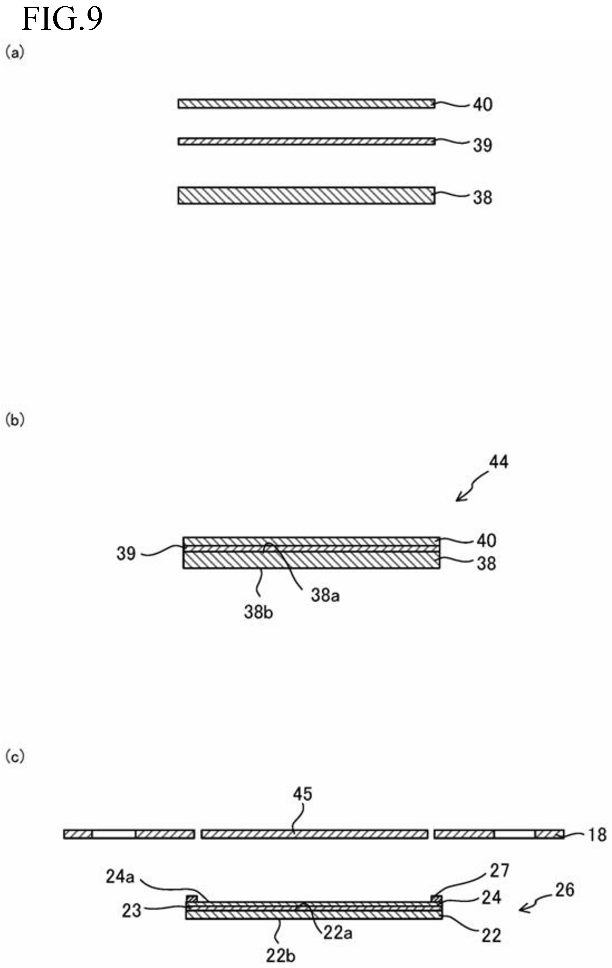

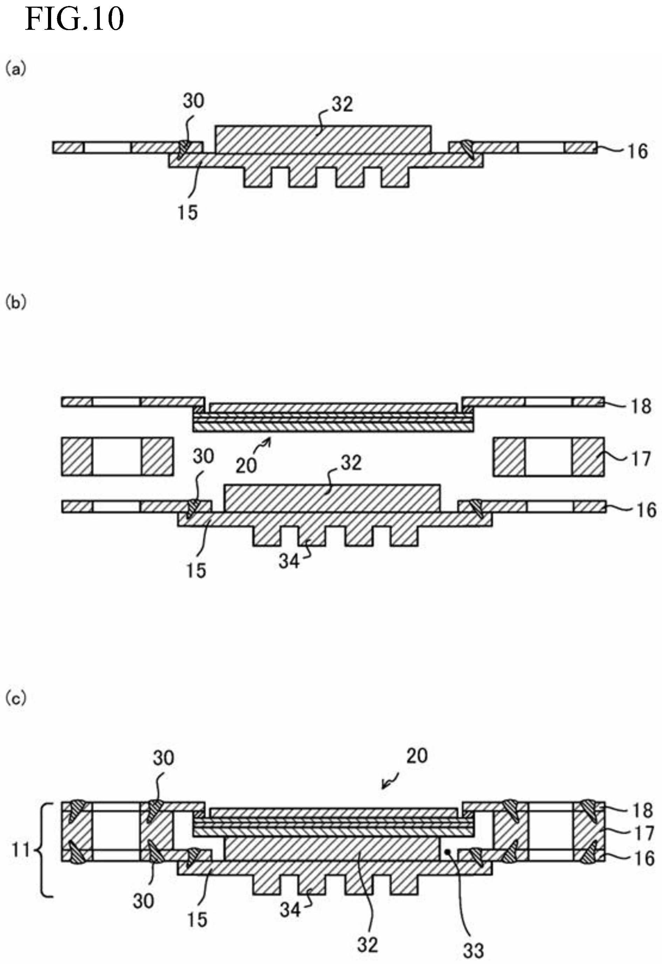

Next, one example of a method of manufacturing the electrochemical cell 11 will be described. Sections (a) to (c) of FIG. 9 and sections (a) to (c) of FIG. 10 are schematic sectional views showing the steps of the method of manufacturing the electrochemical cell 11. First, the cell main body 20 including the air electrode 25, the electrolyte layer 24, and the fuel electrode 21 stacked together and shaped is prepared. The preparation of the cell main body 20 can be performed, for example, as follows. Section (a) of FIG. 9 is a sectional view of a compact 38 of the support 22, a compact 39 of the functional layer 23, and a compact 40 of the electrolyte layer 24. Each of the compacts 38 to 40 is obtained by adding a plasticizer, a dispersant, a binder, etc. to a raw material powder, thereby making slurry, then molding a sheet by the doctor blade method, and cutting the sheet to a predetermined size. A pore-forming material is added to the slurry when necessary.

The compact 38 can be made by extrusion molding, press molding, or injection molding, instead of using the doctor blade method. The compacts 39 and 40 can be made by thick film printing by slurry application, instead of using the doctor blade method.

Section (b) of FIG. 9 is a sectional view of a stacked body 44. In a first molding step, the compacts 39 and 40 are stacked in this order on a front surface 38a of the compact 38. At that time, the compacts 39 and 40 may be successively disposed on the front surface 38a of the compact 38, or the compacts 39 and 40 laid on each other may be disposed on the front surface 38a of the compact 38.

Section (c) of FIG. 9 is a sectional view of a sintered body 26, a compact 45 of the air electrode 25, and the cell separator 18. The sintered body 26 is obtained by firing the debindered stacked body 44 in a firing step.

After having obtained the sintered body 26, the compact 45 of the air electrode 25 is disposed at the center of the front surface 24a of the electrolyte layer 24, and a brazing filler metal 27 is disposed at the peripheral edge of the front surface 24a. The compact 45 is obtained by adding a plasticizer, a dispersant, a binder, etc. to a raw material powder, thereby making slurry, then molding a sheet by the doctor blade method, and cutting the sheet to a predetermined size. The compact 45 can be made by thick film printing by slurry application, instead of using the doctor blade method. The cell separator 18 is pressed against the brazing filler metal 27, followed by heating to a predetermined temperature, whereby firing of the compact 45 and brazing of the cell separator 18 are performed simultaneously. As a result, the cell main body 20 with the cell separator 18 brazed thereto is obtained.

In the above description, the sintered body 26 in which the fuel electrode 21 and the electrolyte layer 24 are integrated is made through firing of the stacked body 44. However, the method of making the cell main body 20 is not limited thereto. The cell main body 20 may be made by separately making the fuel electrode 21 and the electrolyte layer 24 through firing, and joining them together.

Separately, the inter connector 15 and the IC separator 16 having respective predetermined shapes through machining are prepared. Each of the inter connector 15 and the IC separator 16 can be made, for example, by cutting a stainless steel plate into a predetermined shape, and adjusting the shape by press working, etc. Next, the IC separator 16 is disposed at a predetermined position of the inter connector 15 such that the IC separator 16 is brought into contact with the inter connector 15 in the stacking direction of the cell main body 20. Subsequently, the IC separator 16 is joined to the inter connector 15 by means of laser welding which is performed such that, in at least a part of the weld portion, the fusion proceeding direction is inclined in relation to the stacking direction of the cell main body 20. In addition, the current collector 32 is joined to the inter connector 15.

Next, the fuel electrode frame 17 is prepared. The fuel electrode frame 17 can be made, for example, by cutting a stainless steel plate into a predetermined shape and adjusting the shape by press working, etc. Next, the fuel electrode frame 17 is disposed at a predetermined position of the cell main body 20 with the cell separator 18 brazed thereto such that the fuel electrode frame 17 is brought into contact with the cell separator 18 in the stacking direction of the cell main body 20. Subsequently, the fuel electrode frame 17 is joined to the cell separator 18 by means of laser welding which is performed such that, in at least a portion of the weld portion, the fusion proceeding direction is inclined in relation to the stacking direction of the cell main body 20. Furthermore, the inter connector 15 with the IC separator 16 welded thereto is disposed at a second predetermined position of a surface of the fuel electrode frame 17 opposite its surface joined to the cell separator 18, such that the IC separator 16 is brought into contact with the fuel electrode frame 17 in the stacking direction of the cell main body 20. Subsequently, the IC separator 16 is joined to the fuel electrode frame 17 by means of laser welding which is performed such that, in at least a portion of the weld portion, the fusion proceeding direction is inclined in relation to the stacking direction of the cell main body 20. The welding between the cell separator 18 and the fuel electrode frame 17 may be performed before or after the welding between the IC separator 16 and the fuel electrode frame 17.

The steps for welding are preferably performed by using a laser machining machine equipped with an optical head moving device. In this case, a jig for inclining the fusion proceeding direction of the weld portion 30 in relation to the cell main body 20 may be used. The optical head moving device may be one which can move the optical head in an X-axis direction and a Y-axis direction, such as an optical head moving stage, or one which can change not only the position of the optical head but also the posture of the optical head such as a robot arm. The laser machining machine may use a laser beam from, for example, a CO₂ laser oscillator, a YAG laser oscillator, a fiber laser oscillator, or a semiconductor laser.

The steps for welding are preferably performed by using a laser machining machine equipped with a galvanometer mirror or a polygon mirror. In this case, the fusion proceeding direction of the weld portion 30 can be easily inclined in relation to the cell main body 20.

In the steps for welding, laser welding may be performed by spirally moving a laser beam in relation to the direction of the line of the weld portion 30. In addition, laser welding may be performed by using an additional function such as weaving and pulsed laser.

In the above-described manner, the electrochemical cell 11 of the present invention can be manufactured. For the manufactured electrochemical cell 11, a leak test (e.g., the amount of leakage is 43 Pa or less at 10 kPa) is performed to confirm the gastightness of the electrochemical cell 11. Notably, in this stage, the air electrode frame 19 may be joined to one of the upper and lower surfaces of the electrochemical cell 11.

### [Method of manufacturing the electrochemical cell stack]

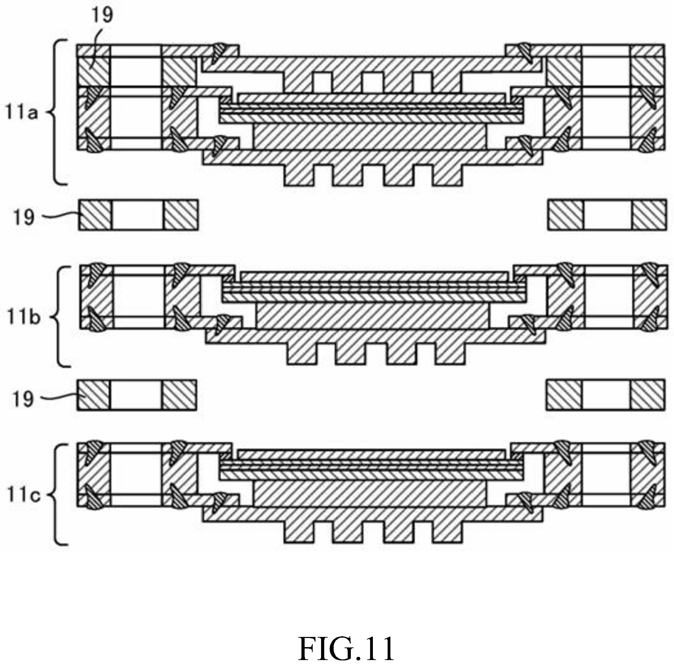

Next, one example of a method of manufacturing the electrochemical cell stack 10 will be described. FIG. 11 is a schematic sectional view showing a step of the method of manufacturing the electrochemical cell stack 10. First, a plurality of electrochemical cells 11 are prepared. Each of the electrochemical cells 11 to be prepared is manufactured as described above. The electrochemical cells 11 to be prepared may be such that an upper-end electrochemical cell 11a, intermediate electrochemical cells 11b, and a lower-end electrochemical cell 11c differ from one another in member structures, or the upper-end electrochemical cell 11a and the lower-end electrochemical cell 11c include only some of the components of the intermediate electrochemical cells 11b. In FIG. 11, the upper-end electrochemical cell 11a has the air electrode frame 19, the inter connector 15, and the IC separator 16 on its upper surface.

Next, the air electrode frames 19 are prepared. The air electrode frames 19 can be made, for example, by means of laser cutting. Next, the above-mentioned electrochemical cells 11 and the above-mentioned air electrode frames 19 are alternately disposed (stacked) in the stacking direction of the cell main body 20. Subsequently, the electrochemical cells 11 and the air electrode frames 19 stacked together are joined to one another. The joining may be performed by fastening with fastening members such as bolts and nuts. When necessary, the upper terminal plate 52 and the lower terminal plate 53 are joined, and the upper end plate 12a and the lower end plate are fastened with bolts. In this manner, the electrochemical cell stack 10 of the present invention can be manufactured.

Needless to say, the present invention is not limited to the above-described embodiment and encompasses various modifications and equivalents within the idea and scope of the present invention. Also, the structures, shapes, numbers, positions, sizes, etc. of the constituent elements shown in each drawing are for convenience of explanation and may be changed appropriately.

### DESCRIPTION OF REFERENCE NUMERALS

10 electrochemical cell stack
11, 11a, 11b, 11c electrochemical cell
12a upper end plate
12b lower end plate
13 bolt
14a, 14b, 14c, 14d passage
15 inter connector
16 IC separator
17 fuel electrode frame
18 cell separator
19 air electrode frame
20 cell main body
21 fuel electrode
22 support
22a front surface
22b back surface
23 functional layer
24 electrolyte layer
24a front surface
24b back surface
25 air electrode
26 sintered body
27 brazing filler metal
30 weld portion
32 current collector
33 fuel chamber
34 current collecting portion
35 air chamber
38 compact of the support
38a front surface
38b back surface
39 compact of the functional layer
40 compact of the electrolyte layer
44 stacked body
45 compact of the air electrode
52 upper terminal plate
53 lower terminal plate
61 first metal member
62 second metal member

## Claims

1. An electrochemical cell **characterized by** comprising:
a cell main body including an air electrode, an electrolyte layer, and a fuel electrode stacked together and shaped;
a first metal member joined to the cell main body;
a second metal member joined to the first metal member by means of welding after being brought into contact with the first metal member in a stacking direction of the cell main body to be located at a predetermined position of the first metal member; and
a third metal member joined to the second metal member by means of welding, on a side of the second metal member opposite its side joined to the first metal member, after being brought into contact with the second metal member in the stacking direction of the cell main body to be located at a second predetermined position of the second metal member, wherein
a region where metal members are joined by welding is defined as a weld portion, and
a fusion proceeding direction of at least a part of the weld portion is inclined in relation to the stacking direction of the cell main body.

2. The electrochemical cell according to claim 1, wherein
the third metal member includes a fourth metal member and a fifth metal member, and
the fourth metal member and the fifth metal member are joined by the weld portion.

3. The electrochemical cell according to claim 1 or 2, wherein the inclination angle of the fusion proceeding direction of the weld portion is 5° or greater and 60° or less.

4. The electrochemical cell according to claim 1 or 2, wherein the fusion proceeding direction of the weld portion is inclined in a direction from the center of the first metal member toward its outer circumference.

5. The electrochemical cell according to claim 1 or 2, wherein the first metal member has a generally rectangular shape as viewed in the stacking direction of the cell main body, and
as approaching each corner portion of the first metal member from its side located adjacent to the corner portion, the inclination angle of the fusion proceeding direction of the weld portion increases and a fusion depth of the weld portion decreases.

6. The electrochemical cell according to claim 1 or 2, wherein the weld portion has a welding width of 80 µm or greater and 400 µm or less.

7. The electrochemical cell according to claim 1 or 2, wherein the weld portion has a fusion depth of 50 µm or greater and 90 µm or less.

8. The electrochemical cell according to claim 1 or 2, wherein the weld portion has a bead width of 100 µm or greater and 500 µm or less.

9. The electrochemical cell according to claim 1 or 2, wherein the first metal member has a thickness of 0.05 mm or greater and 1 mm or less.

10. The electrochemical cell according to claim 1 or 2, wherein the cell main body has a thickness of 0.5 mm or greater and 5 mm or less as measured in the stacking direction of the cell main body.

11. The electrochemical cell according to claim 1 or 2, wherein the cross-sectional shape of the weld portion on the first metal member side is such that the width of the weld portion decreases from the first metal member side toward the second metal member side, and
the cross-sectional shape of the weld portion on the third metal member side is such that the width of the weld portion decreases from the third metal member side toward the second metal member side.

12. The electrochemical cell according to claim 1 or 2, wherein the electrochemical cell is an electrolysis cell or a reversible fuel cell.

13. An electrochemical cell stack **characterized in that** a plurality of electrochemical cells as recited in claim 1 or 2 are stacked in the stacking direction of the cell main body and are joined.

14. A method of manufacturing an electrochemical cell, **characterized by** comprising the steps of:
preparing a cell main body including an air electrode, an electrolyte layer, and a fuel electrode stacked together and shaped;
preparing a first metal member which is to be joined to the cell main body, a second metal member which is to be joined to the first metal member, and a third metal member which is to be joined to the second metal member;
bringing the second metal member into contact with the first metal member in a stacking direction of the cell main body to be located at a predetermined position of the first metal member, and welding the second metal member to the first metal member by means of laser welding in such a manner that a fusion proceeding direction of the welding is inclined in relation to the stacking direction of the cell main body; and
bringing the third metal member into contact with the second metal member, on a side of the second metal member opposite its side joined to the first metal member, in the stacking direction of the cell main body to be located at a second predetermined position of the second metal member, and welding the third metal member to the second metal member by means of laser welding in such a manner that the fusion proceeding direction of the welding is inclined in relation to the stacking direction of the cell main body.

15. The method of manufacturing an electrochemical cell according to claim 14, wherein the steps for welding are performed by using a laser machining machine equipped with an optical head moving device.

16. The method of manufacturing an electrochemical cell according to claim 15, wherein the steps for welding are performed by using a laser machining machine equipped with a galvanometer mirror or a polygon mirror.

17. A method of manufacturing an electrochemical cell stack **characterized by** comprising the steps of:
preparing a plurality of electrochemical cells by the manufacturing method as recited in any one of claims 14 to 16;
stacking the electrochemical cells in the stacking direction of the cell main body; and
joining the stacked electrochemical cells.
